# EUROPÄISCHE PATENTANMELDUNG

(11) **EP 1 273 558 A1**
(43) Veröffentlichungstag der Anmeldung: **08.01.2003**
(21) Anmeldenummer: 02013422.7
(22) Anmeldetag: 13.06.2002
(51) Int. Cl.: C03C 17/36

(54) **Verfahren zur Herstellung eines wärmereflektierenden Schichtsystems für transparente Substrate und danach hergestelltes Schichtsystem**

(30) Priorität: 02.07.2001 DE 10131932
(71) Anmelder: Fraunhofer-Gesellschaft zur Förderung der angewandten Forschung e.V., 80636 München (DE)
(72) Erfinder: Kirchhoff, Volker, Dr., 01324 Dresden (DE); Hartung, Ullrich, Dr., 01129 Dresden (DE); Kopte, Torsten, Dr., 01731 Kreischa (DE); Fahland, Matthias, Dr., 01809 Heidenau (DE)

(57) **Zusammenfassung**

Die bekannten Schichtsysteme bestehen neben anderen Schichten, wie Entspiegelungsschichten, aus Funktionsschichten, vorzugsweise aus Ag, und Blockerschichten aus Metall, die die Funktionsschicht vor Einflüssen schützen sollen. Selbst die verschiedensten Materialkombinationen sind nicht optimal bezüglich der erreichten optischen Werte, Belastbarkeit, Beständigkeit und Langzeitstabilität. Es treten auch Einbußen der optischen Werte beim Härten und Biegen der beschichteten Scheiben ein.

Erfindungsgemäß wird die Blockerschicht als Gradientenschicht aus dem Material der Blockerschicht und der Funktionsschicht und eine oder mehrere Entspiegelungsschichten als Gradientenschicht ausgeführt. Diese Einzelschichten sind aus unterschiedlichen Metallnitriden hergestellt. Der Gradient wird kontinuierlich oder diskontinuierlich gebildet.

Das Einsatzgebiet ist vorzugsweise die Herstellung von wärmedämmender Sicherheitsverglasung und Scheiben für Fahrzeuge.

## Beschreibung

Die Erfindung betrifft ein Verfahren zur Herstellung eines wärmereflektierenden Schichtsystems für transparente Substrate, vorzugsweise Glas, welches aus mindestens einer elektrisch hoch leitfähigen Funktionsschicht, an welche sich mindestens eine metallische Blockerschicht - auch Zwischenschicht genannt - unmittelbar anschließt, und mehreren hochbrechenden Entspiegelungsschichten besteht, nach Patentanmeldung 100 46 810.1-45. Das Schichtsystem wird auch als low-e-Schichtsystem bezeichnet.
Derartige Schichtsysteme auf Glas eignen sich für einen anschließenden Härt- bzw. Biegeprozess der beschichteten Glasscheibe, z. B. für Fahrzeuge, vorzugsweise auch als wärmedämmende Sicherheitsverglasung.

Es sind eine Vielzahl solcher wärmereflektierenden Schichtsysteme bekannt. Das Schichtsystem besteht allgemein aus Funktionsschicht, Grund- und Deckschicht, wobei letztere als Entspiegelungsschichten dienen. Die einzelnen Schichten können sich im Gesamtsystem mehrfach wiederholen. Als Funktionsschicht für die Wärmereflexion werden üblicherweise Edelmetalle - vorzugsweise Silber - aufgrund ihres guten selektiven Reflexionsvermögens schon bei geringen Schichtdicken verwendet. Die Entspiegelungsschichten dienen zur Verbesserung der optischen Eigenschaften im sichtbaren Längenwellenbereich und sind mindestens auf einer Seite der Funktionsschicht oder auf der über der Funktionsschicht aufgebrachten Blockerschicht angeordnet. Die Entspiegelungsschicht beeinflusst entscheidend das Gesamtschichtsystem hinsichtlich dessen elektrischer Eigenschaft, d. h. Leitfähigkeit, der mechanischen Eigenschaften, z. B. Kratzfestigkeit und chemischer Eigenschaften, z. B. Beständigkeit gegen Säuren.

Es ist bekannt, zur Verbesserung der optischen Eigenschaften, insbesondere zur Erhöhung der Transmission im sichtbaren Bereich, hochbrechende Entspiegelungsschichten, vorzugsweise dielektrische Metalloxide oder -nitride, oberhalb und/oder unterhalb der Funktionsschicht anzuordnen. Beim Aufbringen eines Metalloxids als Entspiegelungsschicht auf die Funktionsschicht und beim Biegen und/oder Härten beschichteter Glasscheiben mit dem damit verbundenen Erwärmem kommt es zur Oxidation der Funktionsschicht, zur Diffusion des Silbers in die Entspiegelungsschicht, zur Diffusion von Komponenten der Entspiegelungsschicht in das Silber und/oder zu Agglomerationen innerhalb der Funktionsschicht. Durch diese Effekte werden das Reflexionsvermögen der Beschichtung für Wärmestrahlung sowie die Transmission im sichtbaren Bereich verringert.

Zur Vermeidung dieser Nachteile ist es bekannt, die Funktionsschicht durch geeignete Materialien - Blocker genannt - vor der teilweisen Zerstörung zu schützen, indem eine Blockerschicht oberhalb und/oder unterhalb der Funktionsschicht angeordnet wird (DE 38 25 671 A1; US 4,894,290; DE 196 32 788 A1).

Als weitere Möglichkeit, die teilweise Oxidation der Funktionsschicht zu unterdrücken, ist der Einsatz von Nitriden als Entspiegelungsschicht bekannt (US 5,837,108). Jedoch kann auch hier, insbesondere bei härt- oder biegbaren Schichtsystemen, im Allgemeinen nicht gänzlich auf die Anordnung einer Blockerschicht verzichtet werden. Außerdem ist die Brechzahl von Metallnitriden im Allgemeinen deutlich geringer als die von Metalloxiden, was zu einer geringeren Entspiegelung (Bandbreite) führt.

Es ist bekannt, zur Verbesserung der Eigenschaften der Entspiegelungsschicht diese nicht nur als eine einzige Schicht anzuordnen, sondern ein Teilschichtsystem aus mindestens zwei Schichten zu verwenden, die meist aus dielektrischem Material sind (DE 39 41 026 A1; DE 39 41 027 A1). Es wurde jedoch festgestellt, dass durch die Kombination der zwei einzeln bewerteten Eigenschaften der Einzelschichten als ein Teilschichtsystem insbesondere die mechanische Beständigkeit negativ beeinträchtigt wird.

Es wurde zur Beseitigung der Mängel des Standes der Technik bereits mit der Patentanmeldung 100 46 810.1-45 vorgeschlagen, ein wärmereflektierendes Schichtsystem für transparente Substrate, welches aus mindestens einer Entspiegelungsschicht, mindestens einer Funktionsschicht aus Silber und mindestens einer auf einer Seite der Funktionsschicht aufgebrachten Blockerschicht aus einem Metall oder einer Metalllegierung und mindestens einer Deckschicht besteht, die durch Aufdampfen oder Sputtern im Vakuum derart aufgebracht werden, indem das Aufbringen der Metallteilchen für die Blockerschicht während der Beschichtung so geregelt wird, dass aus dem Silber der Funktionsschicht und dem Metall der Blockerschicht eine Gradientenschicht als Blockerschicht entsteht, dass bei der Herstellung einer Entspiegelungsschicht aus mehreren Metalloxid-Einzelschichten die Zuführung der aufzubringenden Metalloxidteilchen für die Einzelschichten so geregelt wird, dass eine Gradientenschicht entsteht und dass bei der Herstellung der Gradientenschichten die Regelung derart erfolgt, dass sich der Anteil des Schichtmaterials der in der Beschichtungsfolge zuerst aufzubringenden Schicht von 100 % auf 0 % und gegenläufig der Anteil des Schichtmaterials der darauf folgenden Schicht von 0 % auf 100 % ändert. Das nach dem vorgeschlagenen Verfahren hergestellte Schichtsystem besteht aus einer Blockerschicht aus einem Metall oder einer Metalllegierung, die mit dem Silber der Funktionsschicht eine Gradientenschicht bildet, und wenn die Entspiegelungsschicht aus mehreren Einzelschichten besteht, ist sie eine Gradientenschicht aus den Metalloxiden der Einzelschichten.
Die Verwendung von Metalloxiden für die Entspiegelungsschicht bzw. -schichten stellt keine optimale Lösung dar.

Der Erfindung liegt die Aufgabe zugrunde, das Verfahren zur Herstellung eines wärmereflektierenden Schichtsystems nach der Patentanmeldung 100 46 810.1-45 bezüglich des verwendeten Materials weiter auszugestalten. Es soll auch farbneutral, mechanisch hoch belastbar, chemisch beständig, langzeitstabil und temperaturbeständig sein. Das Schichtsystem soll ohne Verringerung der Lichttransmission bzw. des Emissionsvermögens härtund biegbar sein.

Erfindungsgemäß wird die Aufgabe nach Anspruch 1 und 2 gelöst.

Das Wesen der Erfindung besteht darin, dass beim Aufbau der Entspiegelungsschicht aus mehreren Einzelschichten gemäß der Patentanmeldung 100 46 810.1-45 diese aus unterschiedlichen Metallnitriden bestehen und der Materialanteil einer Schicht von anfangs 100 % bis 0 % reduziert und der Anteil an Material der folgenden Schicht wird umgekehrt von 0 % bis zu 100 % erhöht. Es wurde festgestellt, dass eine derartige Gradientenschicht aus Metallnitriden die Gesamteigenschaften des Systems ebenfalls verbessert.

Das erfindungsgemäße Verfahren wird bekannterweise derart ausgeführt, dass die Beschichtungsstationen zur Herstellung der Entspiegelungsschicht für jede Metallnitridschicht in der Beschichtungsanlage räumlich so angeordnet werden, dass sich die Verteilungen der aufzubringenden Teilchen auf der Substratebene bzw. der vorangegangen bereits aufgebrachten Schicht teilweise überlagern. Die Eigenschaften der Gradientenschicht lassen sich einfach mit Mitteln der Prozessführung, z. B. Abstand der Beschichtungsstationen, Parameter der Energieeinspeisung, Verhältnis der eingespeisten Leistungen, beeinflussen.

An einem Ausführungsbeispiel wird die Erfindung beschrieben. Die zugehörige Zeichnung zeigt ein Schichtsystem mit als Gradientenschicht ausgebildeter Funktions- und Blockerschicht und einseitig angeordneter Entspiegelungsschicht.

Das erfindungsgemäße Verfahren wird wie folgt ausgeführt:

Die Fig. zeigt ein Schichtsystem, bei welchem auf der Glasscheibe in einem ersten Verfahrensschritt eine Entspiegelungsschicht 1 als Gradientenschicht aus quasi zwei Einzelschichten aus AIN und Si₃N₄ aufgebracht ist. Der Anteil des zuerst aufgebrachten Materials - AIN - geht während des Aufbringens von einem Anteil von 100 % kontinuierlich über die Dicke der Schicht auf 0 % zurück, während der Anteil des nächstfolgenden Materials - Si₃N₄ - gegenläufig von 0 % auf 100 % ansteigt. Danach wird die Funktionsschicht 2 aus Ag aufgebracht und auf der Funktionsschicht 2 aus Ag die Blockerschicht 3 als eine durchgehende Gradientenschicht aus NiCr und Ag. Innerhalb dieser Blockerschicht 3 beträgt der Gradient beider Materialien 0 % bis 100 % und umgekehrt. Der Übergang von der Funktionsschicht 2 zur Blockerschicht 3 ist nicht fließend, sondern es liegt eine, wenn auch nicht exakt feststellbare Trennung beider Schichten vor.

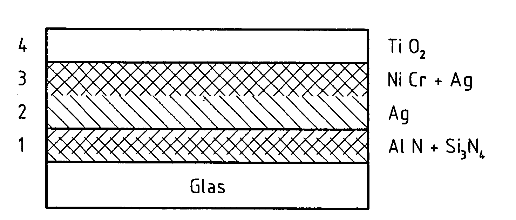

## Patentansprüche

1. Verfahren zur Herstellung eines wärmereflektierenden Schichtsystems für transparente Substrate, insbesondere Glas, bestehend aus mindestens einer Entspiegelungsschicht, die aus mehreren Einzelschichten besteht, mindestens einer Funktionsschicht aus Silber und mindestens auf einer Seite dieser Funktionsschicht aufgebrachten metallischen Blockerschicht, die aus dem Silber und dem Metall als Gradientenschicht ausgeführt ist und wobei sich der Anteil des Schichtmaterials der ersten Schicht von 100 % auf 0 % und gegenläufig der Anteil des folgenden Schichtmaterials von 0 % auf 100 % ändert, sowie mindestens einer Entspiegelungs- oder Deckschicht, wobei die Schichten durch Aufdampfen oder Sputtern im Vakuum aufgebracht werden, nach Patentanmeldung 100 46 810.1-45, **dadurch gekennzeichnet, dass** die Einzelschichten der Entspiegelungsschicht aus unterschiedlichen Metallnitriden hergestellt werden und die Zuführung der aufzubringenden Metallnitridteilchen für die Einzelschichten so geregelt wird, dass eine Gradientenschicht gebildet wird, deren Anteil des einen Metallnitrids einer Schicht von 100 % auf 0 % und dazu gegenläufig das Metallnitrid der anderen Schicht von 0 % auf 100 % verändert werden.

2. Wärmereflektierendes Schichtsystem, hergestellt nach Anspruch 1, bestehend aus mindestens einer Entspiegelungsschicht aus mehreren Einzelschichten, mindestens einer Funktionsschicht aus Silber, mindestens einer auf einer Seite der Funktionsschicht aufgebrachten metallischen Blockerschicht als Gradientenschicht aus diesem Metall und Silber, wobei sich der Anteil des Metalls der Blockerschicht zum Silber über seine Dicke von 100 % auf 0% und gegenläufig der Anteil des Silbers zum Metall der Blockerschicht von 0 % auf 100 % kontinuierlich oder diskontinuierlich ändert, sowie mindestens einer Entspiegelungs-, Haft-, Schutz- und/oder Deckschicht, nach Patentanmeldung 100 46 810.1-45, **dadurch gekennzeichnet, dass** die Einzelschichten der Entspiegelungsschicht aus einem Metallnitrid bestehen und eine Gradientenschicht sind, deren Anteil des Schichtmaterials der in der Beschichtungsfolge zuerst aufzubringenden Schicht von 100 % auf 0 % und gegenläufig der Anteil des Schichtmaterials der darauf folgenden Schicht von 0% auf 100 % kontinuierlich oder diskontinuierlich ändert.
